# EUROPÄISCHE PATENTSCHRIFT

(11) **EP 0 625 088 B1**
(45) Veröffentlichungstag und Bekanntmachung des Hinweises auf die Patenterteilung: **02.01.1997**
(21) Anmeldenummer: 93924031.3
(22) Anmeldetag: 09.10.1993
(51) Int. Cl.: B28B 19/00, B28B 13/02

(54) **VERFAHREN ZUR HERSTELLUNG VON VERBUNDPLATTEN**
PROCESS FOR PRODUCING COMPOSITE BOARDS
PROCEDE DE FABRICATION DE PANNEAUX SANDWICH

(30) Priorität: 10.10.1992 DE 4234269; 04.09.1993 DE 9313351 U
(43) Veröffentlichungstag der Anmeldung: 23.11.1994
(73) Patentinhaber: Wedi, Helmut, D-48282 Emsdetten (DE)
(72) Erfinder: Wedi, Helmut, D-48282 Emsdetten (DE)
(74) Vertreter: Hoffmeister, Helmut, Dr. Dipl.-Phys.
(86) Internationale Anmeldenummer: EP9302769
(87) Internationale Veröffentlichungsnummer: WO9408767

(56) Entgegenhaltungen:
- EP-A- 0 272 104
- WO-A-83/01410
- WO-A-93/22118
- AT-A- 242 581
- CA-A- 1 275 850
- DE-A- 2 854 228
- DE-A- 3 313 641
- DE-A- 4 128 636
- FR-A- 2 455 984
- FR-A- 2 458 391
- GB-A- 1 399 402
- US-A- 2 213 249
- US-A- 3 138 335
- SOVIET INVENTIONS ILLUSTRATED Week 8649, 18. Dezember 1986 Derwent Publications Ltd., London, GB; AN 86-324348/49 & SU,A,1 222 563 (BELO GOSSTROI ARCH) 7. April 1986
- SOVIET INVENTIONS ILLUSTRATED Week 8619, 23. Mai 1986 Derwent Publications Ltd., London, GB; AN 86-123957/19 & SU,A,1 184 688 (STROIINDUSTRIYA) 15. Oktober 1985

## Beschreibung

Die Erfindung betrifft ein Verfahren zur Herstellung von Verbundplatten gemäß Oberbegriff des Anspruches 1.

Aus der AT-A-242 581 ist ein Verfahren zur Herstellung von Verbundplatten bekannt, bei dem horizontal aufgelegte und geförderte Schaumstoffkerne zunächst mit einer ersten teigigen Mörtelschicht versehen werden, die mit einer schwingenden Walze verdichtet wird. Hinter der Verdichtungswalze wird von einer Vorratsrolle eine Glasfasergewebebahn abgezogen, auf die Mörtelschichtoberseite aufgedrückt und von der laufenden Bahn mitgenommen. An einer weiteren, nachgeschalteten Station wird auf die erste Deckschicht und die Glasfasergewebebahn eine weitere Mörtelschicht locker aufgebracht und mit einer zweiten schwingenden Walze verdichtet.

Verbundplatten, die nach dem Verfahren gemäß AT-A-242 581 hergestellt werden, weisen auf dem Schaumstoffkern Deckschichten auf, deren Dicke zusammengenommen die Dicke der Armierung weit überschreitet. Die so hergestellten Verbundplatten sind daher schwer im Gewicht und für Innenausbauten, insbesondere zur Herstellung von mit Fliesen zu belegenden Trennwänden, schlecht geeignet. Soweit bekannt, werden die nach AT-A-242 581 hergestellten Platten daher in erster Linie als Flachdach- und Fassadenplatten verwendet. Mit anderen Worten: Für das Einbetten und Verkleben der Glasfasergewebebahn wird wesentlich zu viel Mörtel verwendet, gemessen am Bedarf für Innenausbauplatten.

Aus der DE-A-34 23 006 ist ein Verfahren zur Herstellung eines plattenförmigen Leichtbauteils bekannt, bei dem zunächst auf ein schaumstoffteil ein Gewebe oder Geflecht stramm aufgespannt wird und anschließend wasserbeständiger Dünnbettmörtel aufgegeben und glattgestrichen wird, so daß das Gewebe oder Geflecht fest verklebt wird.

Nachteilig ist, daß das Gewebe oder Geflecht beim Aufbringen aufzuspannen ist. Hierdurch können zwischen dem Schaumstoffteil und dem Gewebe oder Geflecht Kräfte auftreten, die zu einer Verformung des Schaumstoffteils bzw. zu einer Ablösung des Gewebes oder Geflechtes von diesem führen. Nachteilig ist darüber hinaus, daß durch das Einzelbespannen und Einzelbestreichen mit Mörtel jedes Teil sehr aufwendig in der Herstellung und eine kontinuierliche Fertigung von Platten nicht möglich ist.

Weiterhin ist ein Verfahren zum Herstellen von Bauplatten aus der GB-A-1 459 575 bekannt. Nach dieser Schrift wird auf ein sich gleichmäßig vorwärts bewegendes Förderband ein Material für eine erste Anlage aus einem Mischer geschüttet und danach mit einer Schaufel auf eine bestimmte Stärke verteilt. In gleicher Art und Weise werden eine Dichtungslage und eine weitere Außenlage darüber angeordnet. Nachteilig bei diesem Verfahren ist, daß die Stärke jeder einzelnen Lage von der Bandgeschwindigkeit und der genauen Arbeit des Personals bestimmt wird.

Ein Verfahren zur Herstellung eines plattenförmigen Bauteils mit Kern wird weiterhin in der DE-C-31 36 935 beschrieben. Der Kern besteht aus im wesentlichen parallel nebeneinander liegenden und zu Schichten angeordneten Mineralfasern, die in einem Winkel zwischen 10 bis 60° zur Bahn- oder Plattenebene verlaufen. Auf einer Seite der geschichteten Mineralfasern wird eine Aluminium- oder Kunststoffolie angeordnet, auf der ein Putz aus einem nicht brennbaren mineralischen Material aufgebracht wird.

Nachteilig ist, daß die Platte instabil ist und sich lediglich zum Umwickeln von Rohrleitungen oder Abdeckungen von ebenen geraden Flächen eignet.

Weiterhin ist ein Verfahren zur Herstellung eines plattenförmigen Bauteils aus der DE-A-34 44 881 bekannt. Der Kern des plattenförmigen Bauteils besteht aus einer Mineralfaserplatte, welche beispielsweise aus Stapelfasern von Glaswolle bzw. Glasseide hergestellt sein kann. Diese Mineralfaserplatte wird vor der Herstellung des Bauteils mehr oder minder stark verdichtet und daher auf einen Bruchteil der Plattendicke verringert. An beiden Plattenseiten wird eine Schicht aufgetragen, die aus Mörtelmix besteht. In diesen Mörtelmix sind Glasfasern eingebettet. Aufgrund der relativ geringen Festigkeit eignet sich darüber hinaus diese Bauplatte lediglich für ein Verkleiden stabiler Wände aus Beton.

Der Erfindung liegt die Aufgabe zugrunde, ein Verfahren zur Herstellung von Verbundplatten mit guten schalldämmenden, wärmedämmenden und/oder mechanischen Eigenschaften bei relativ geringem Gewicht zu schaffen, bei dem ein geringer Materialverbrauch zu einer ebenmäßigen Platte führt.

Gemäß der Erfindung wird ein Verfahren zur Herstellung von Verbundplatten vorgeschlagen, wie es aus Anspruch 1 vervorgeht.

Die mit der Erfindung erzielten Vorteile bestehen insbesondere darin, daß die Kernbahn sowohl aus einem Schaumstoffkern sein kann, jedoch teilweise auch ein Kernelement aufweisen kann, das aus einer Schicht Fasern, wie z.B. Wolle, aus Kugeln, Schnitzeln, Streifen, Teilstücken oder dergleichen aus organischen und/oder anorganischen Stoffen allein bestehen oder mit einer zusätzlichen Schicht Extruderschaum versehen sein kann. Dadurch, daß in den noch feuchten, vorzugsweise durch Aufgießen auf die Kernbahn aufgebrachten Mörtel das Glasfasergewebe mit der gleichen Geschwindigkeit wie die Transportbewegung der endlosen Kernbahn aufgebracht wird, kommt es zu keinerlei inneren Spannungen und dadurch zu keinem Verziehen der Platten. Nach dem Aushärten steht somit eine Verbundplatte zur Verfügung, die sich durch eine hohe Festigkeit und gute wärme- und schallisolierende Eigenschaften auszeichnet, die nicht nur zum Aufbringen von Verkleidungen, sondern auch als Wandteil verwendbar ist und so verputzt, tapeziert oder gefliest werden kann.

Von besonderem Vorteil ist hierbei, daß auf die glatte Fläche der Kernbahn eine armierte Mörtelschicht aufgebracht ist, so daß plattenförmige Bauteile entstehen, die sich besonders gut im Baugewerbe, z.B. zum Aufstellen von Trennwänden, eignen. Die aus den plattenförmigen Bauteilen hergestellten Trennwände haben eine solche Stabilität, daß Fliesen, Beschläge und Armaturen anbringbar sind.

Wesentlich ist, daß auf der einen Seite die Mörtelschicht aufgrund der Konsistenz des flüssig aufgebrachten, ausgehärteten Mörtels ausgesprochen stabil ist, zum anderen aber diese Schicht auch sehr dünn sein kann. Es hat sich dabei als vorteilhaft erwiesen, wenn die Konsistenz des flüssig aufgebrachten Mörtels nach DIN 1060 (Messung der Ausbreitung mit Wickertbecher) eine Ausbreitung von 22 - 28 cm ergibt.

Dabei ist vorteilhaft, daß der flüssig aufzubringende Mörtel über zwei eng benachbart stehende, drehende Walzen, die sich vorzugsweise gleichsinnig drehen, auf die Kernbahn läuft. Durch die Walzen läßt sich einmal die Homogenität des Mörtels immer wieder aufrechterhalten, so daß es nicht zu Aushärtungen vor dem Aufbringen kommt. Zum anderen ist durch die Drehgeschwindigkeit oder die Abstandsstellung der Walzen eine Feindosierung des Mörtelzulaufs unter Regelung möglich.

Die Regelung ist beispielsweise dadurch möglich, daß die durch die Mörtelaufbringvorrichtung strömende Mörtelmenge durch ein Öffnen oder Schließen einer Dosiervorrichtung, beispielsweise der vorgenannten Walzen, geregelt wird.

Vorteilhaft ist weiterhin, die vorgenannte Schicht aus Fasern, Kugeln, Schnitzeln, Streifen, Teilstücken oder dergleichen aus organischen oder anorganischen Stoffen zu verdichten. Hierdurch ist es möglich, eine Kernbahn zu schaffen, die bereits im wesentlichen über die äußeren Abmessungen der späteren Verbundplatte verfügt und darüberhinaus eine solche Festigkeit hat, daß sie statischen und/oder dynamischen Belastungen ausgesetzt werden kann, wie sie für den vorgenannten Verwendungszweck zu erwarten sind.

Vorteilhaft ist es, wenn die Schicht aus Fasern, Kugeln, Schnitzeln, Streifen, Teilstücken oder dergleichen aus organischen und/oder anorganischen Stoffen mit Extruderschaum so beschichtet wird, daß sich der Extruderschaum mit den Fasern, Kugeln, Schnitzeln, Streifen, Teilstücken oder dergleichen aus organischen und/oder anorganischen Stoffen durchsetzt oder verbindet. Hierdurch wird einseitig oder sandwichartig ein Kern aus organischen oder anorganischen Stoffen geschaffen, bei dem die mechanisch nicht sehr beanspruchbaren Mineralfasern mit dem härteren und homogeneren Extruderschaum auf wenigstens einer der beiden Außenseiten verbunden sind.

Der verwendete Schaumstoff kann beispielsweise Polystyrolschaum oder Foamglas sein oder aus lockerem oder geschäumtem Recycling-Material oder holzbindenden Plattenmaterial bestehen. Es lassen sich aber auch andere oder ähnliche Materialien verwenden, beispielsweise lockeres oder geschäumtes, gepreßtes Recyclingmaterial, Polyurethanschäume, feste Mischwerkstoffe, z. B. holzbindende Werkstoffe und dergleichen. Wesentlich ist auch hier, daß der Schaumstoffkern im Laufe des Verfahrens ein steifes und armiert strukturiertes Sandwichgerüst enthält, das ihn sowohl feuerfest als auch dazu geeignet macht, mit Verkleidungsplatten, also beispielsweise Fliesen, beklebt oder in sonstiger Art versehen zu werden, bzw. verputzt, tapeziert oder gestrichen zu werden.

Mit Vorteil kann die armierte Mörtelschicht sehr dünn gewählt werden, beispielsweise bis auf 0,2 mm heruntergefahren werden. Nach oben sind im wesentlichen keine Grenzen gesetzt.

Um ein lockeres, aber gleichmäßiges Einlegen der Bahn aus Glasfasergewebe zu ermöglichen, wird diese über einen Bahnspeicher geführt.

Es sei hier angemerkt, daß der Begriff "Glasfasergewebe" lediglich zur Vereinfachung der Beschreibung gewählt worden ist. Es können beispielsweise auch Glasfaservliese oder andere Glasfaser-Non-Woven-Materialien verwendet werden. Es sei aber auch nicht ausgeschlossen, daß beispielsweise Aramidgewebe, Polyester-Vliese oder dergleichen eingesetzt werden, wenn sie die erforderlichen Bewehrungseigenschaften erbringen. Möglich ist auch, dünne Schichten als Metallgeweben, z.B. aus Kupfer, oder oberflächenveredelten Eisengeweben einzusetzen.

In der Zeichnung sind Ausführungsbeispiele dargestellt. Es zeigen in schematischer Darstellung
- Figur 1a: eine Anlage zur Herstellung einer Kernbahn;
- Figur 1b: eine andere Ausführungsform einer Anlage zur Herstellung einer Kernbahn;
- Figur 2: eine Vorrichtung zur Herstellung eines plattenförmigen Bauteils aus einer Kernbahn;
- Figur 3a: ein plattenförmiges Bauteil mit einem Schaumstoffkern in Schnittdarstellung;
- Figur 3b: ein plattenförmiges Bauteil mit einem Mineralfaserkern bzw. einem Wollkern in Schnittdarstellung;
- Figur 3c: ein plattenförmiges Bauteil mit einem Mineralfaserkern bzw. einem Wollkern in einer anderen Ausführungsform in Schnittdarstellung
- Figur 3d: ein plattenförmiges Bauteil mit einem Mineralfaserkern bzw. einem Wollkern in einer weiteren anderen Ausführungsform in Schnittdarstellung.

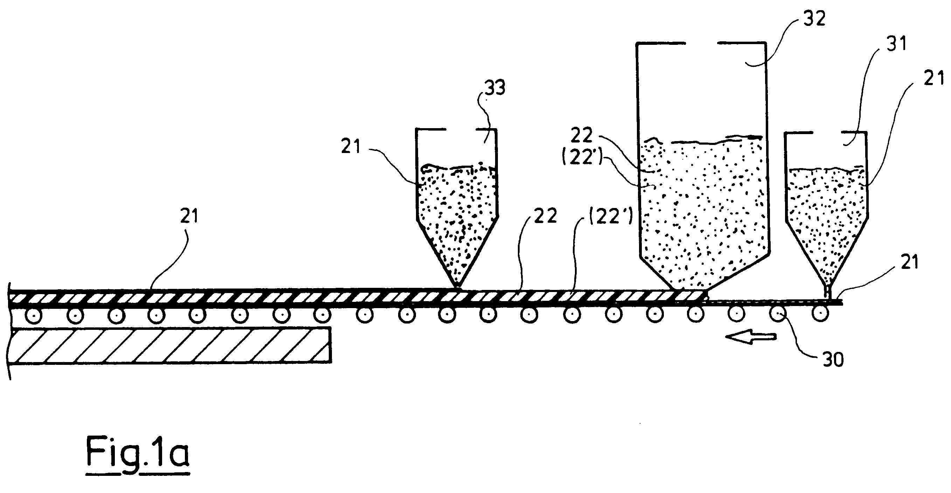

Um eine Kernbahn 2 herstellen zu können, wird gemäß Figur 1a auf einen entsprechend ausgerüsteten Rollengang 30 von einer Extruderschaumvorrichtung 31 eine Schicht Extruderschaum 21 extrudiert und aufgebracht. Auf die sich vorwärts bewegende Schicht aus Extruderschaum 21 werden von einer Faserverteilvorrichtung 32 Mineralfasern 22 bzw. Kunststoff- oder Wollfasern 22' gelegt. Als "Wolle 22'" kann Schafswolle, Lamawolle oder eine andere tierische Wolle, eine Filzware aus recycelter Kleidung oder dergleichen oder eine Mischung aus Wolle mit Kunstfasern oder auch Kunstfasern allein eingesetzt werden. Die Faserverteilvorrichtung 32 kann dabei die Fasern 22 locker oder verdichtet auf die Extruderschaumschicht 21 legen.

Die Kernbahn kann eine aus nur zwei Lagen, nämlich einer Lage Extruderschaum 21 und einer Lage Fasern 22 bestehende Bahn 2''' sein. Möglich ist es aber auch, daß auf die Faserlage eine obere Deckschicht aus Extruderschaum 21 aufgeschäumt wird, so daß die Kernbahn 2'''' entsteht, die sandwichartig aus zwei äußeren Schichten Extruderschaum und einer darin befindlichen Faserschicht besteht.

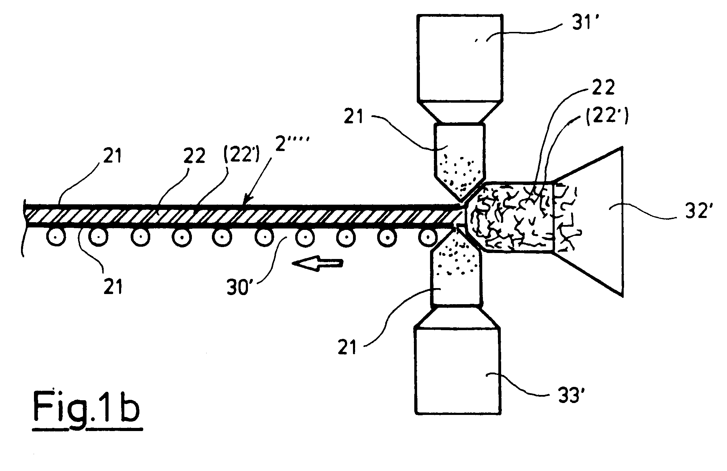

Eine weitere Möglichkeit zur Herstellung einer Kernbahn ist in Figur 1b dargestellt. Hierbei werden Mineral- 22 und/oder Naturfasern 22' durch eine Faserverdichtungsvorrichtung 32' bahnförmig vorgeformt, wobei eine Verdichtung der Fasern 22 bzw. 22' unter Formung einer Schicht vorgenommen wird. Treten die Fasern 22 bzw. 22' aus der Vorrichtung 32' aus, nimmt die Dicke der Faserschicht durch die Entspannung der Fasern wieder zu, wobei locker liegende Mineralfasern 22 und/oder Wollfasern 22' nach oben herausragen. Wird diese sich lockernde Bahn aus Fasern 22 bzw. 22' ein- oder beidseitig mit einer Schicht aus Extruderschaum 21 aus einer Extruderschaumvorrichtung 31' und/oder 32' eingeschäumt, können die Fasern 22 bzw. 22' eine innige Verbindung mit dem Extruderschaum 21 eingehen. Hierdurch entsteht eine Kernbahn 2'''', die auf einer Rollenbahn 30'abgelegt wird und die die positiven Eigenschaften von ausgehärtetem Extruderschaum 21 und Mineralfasern 22, nämlich gute schall- und wärmeisolierende und statische bzw. dynamische Eigenschaften aufweist.

Bei einer Kernbahn 2'' bzw. 2''' können die Mineralfasern 22 durch die Mineralfaserverdichtungsvorrichtung 32 bzw. 32' auch so verdichtet werden, daß die Schicht glatt und stabil ist.

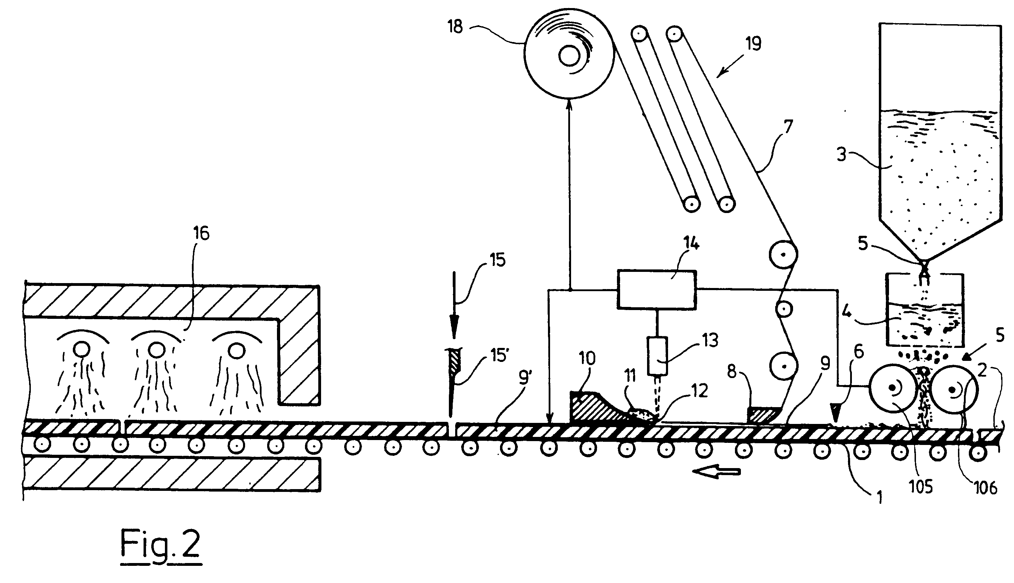

Eine Kernbahn 2' oder 2'', 2''', 2'''' kann in einer Vorrichtung weiterverarbeitet werden, die in Fig. 2 dargestellt ist. Aus der Kernbahn 2 werden dann Verbundplatten hergestellt. Eine Kernbahn 2 wird auf eine angetriebene Rollenbahn gelegt. Hierbei kann die endlose Bahn entweder platten- oder abschnittsweise herangeführt werden. Ein Mörtelsilo 3 ist in einiger Entfernung von einem Mörtelsieb 4 angebracht. Zwischen dem Mörtelsieb 4 und Oberfläche der Kernbahn 2 ist eine Dosiervorrichtung 5 vorgesehen. Die Dosiervorrichtung 5 besteht aus zwei eng benachbarten, jedoch sich nicht kontaktierenden Walzen 105 und 106, die im gleichen Drehsinn rotieren. Die Walzen 105 und 106 sind mit flüssigkeitsabweisendem Gummi der Shore-Härte W 1357 beschichtet, haben einen Durchmesser von etwa 200 mm und sind synchron über einen drehzahlsteuerbaren Elektromotor angetrieben.

Die Viskosität des aus dem Vorratsbehälter 3 durch ein Sieb der Walzenanordnung fließenden Mörtels ist sehr wichtig. Es handelt sich um einen Dünnbettmörtel auf Zementbasis mit Kunststoffanteilen, wobei letztere die Elastizität des ausgehärteten Mörtels verbessern. Der Mörtel ist außerdem mit Füllstoffen versehen, die seine exakt einzuhaltenden Thixotropie-Eigenschaften verbessern. Hierzu eigenen sich beispielsweise Quarzmehl oder Kreide. Die einzelnen Rezepturen werden je nach Anforderungen von spezialisierten Firmen hergestellt.

Das Ausbreitungsmaß des Mörtels wird in einem frustrokonischen Wickertring (oberer freier Durchmesser 79 mm, unterer 65 mm bei 40 mm Höhe) nach DIN 1060 (EN 196) auf einem Hegemann-Tisch gemessen. Dabei soll der Durchmesser des Ausbreitungskuchens zwischen 22 und 28 cm, vorzugsweise zwischen 23 und 27 cm betragen. Die sämige Konsistenz des Mörtels wird durch die Walzenbewegung der Walzen 105 und 106 homogenisiert bzw. erhalten. Durch den Spalt zwischen den Walzen läuft der Mörtel auf die Kernbahn 2 und wird durch einen Abstreifer 6, der dem Walzenpaar nachgeschaltet ist, auf der Oberfläche der Kernbahn verteilt.

Nach dem Abstreifer 6 wird im weiteren Verlauf eine endlose Bahn aus Glasfasergewebe oder -vlies 7 in praktisch spannungslosem Zustand, d. h. im wesentlichen aufgrund des Eigengewichtes, und unter gleicher Geschwindigkeit wie die Transportgeschwindigkeit der Kernbahn 2, herangeführt. Auf einer Vorratsrolle 18 befindet sich ein Vorrat an Glasfasergewebe 7, der über einen Bahnspeicher 19 geführt wird, wie er aus der Textiltechnik an sich bekannt ist. Die Bahn aus Glasfasergewebe oder -vlies 7 wird durch eine Andrückvorrichtung 8 auf eine geringe Höhe (ca. 2 mm) über der Bahn 2 geführt und dabei etwas in die Mörtelschicht 9 eingedrückt und eingebettet. Dabei dringt der Mörtel sowohl unter das Glasfasergewebe als auch in den Raum zwischen den einzelnen Maschen des Gewebes. Eine hohe Klebkraft wird damit gewährleistet, da der Abstand der Glasfasergewebeschicht so bestimmt ist, daß gerade noch eine Klebeschicht zwischen dem Glasfasergewebe und der Oberfläche der Kernbahn aufrechterhalten bleibt.

Durch einen weiteren Abstreifer 10 wird der überschüssige Mörtel oberhalb des Glasfasergewebes abgestreift und in einer solchen Schicht verteilt, daß diese die Bahn aus Glasfasergewebe oder -vlies 7 sowohl einbettet als auch leicht überragt, so daß die Bahn anschließend eine Armierung im noch feuchten Mörtel 9 bildet, die jedoch über eine nur dünne Mörtelschicht die Oberfläche der Bahn kontaktiert. Der sich vor dem Abstreifer 10 bildende Mörtelschwall 11 bildet als vordere Begrenzung eine Lippe 12, die mit Hilfe eines opto-elektronischen oder kapazitiven Fühlers 13 abgetastet wird.

Erreicht die Lippe eine Stellung, die zu weit entfernt ist von dem Abstreifer 10, so wird das Fühlersignal vom Fühler 13 durch die Datenverarbeitungsanlage 14 so ausgelegt, daß die Dosiervorrichtung 5 weiter geschlossen wird, indem die Walzengeschwindigkeit gedrosselt wird, so daß die zeitlich ausströmende Mörtelmenge abnimmt.

Weicht die Lippe 12 zurück in Richtung Abstreifer 10, so läßt die EDV-Signalverarbeitung die Drehgeschwindigkeit der beiden Walzen 105 und 106 erhöhen, so daß eine größere Mörtelmenge freigegeben wird.

Nach dem Abstreifer 10 befindet sich eine äußerst gleichmäßige Mörtelschicht 9 auf der Bahn 2.

Die Bahn 2 gelangt nun in eine Schneidstation 15, wo ein Messer 15' die noch feuchte Mörtelschicht 9 und die Armierung aus Glasfasergewebe oder -vlies 7 durchschneidet, gegebenenfalls auch das Kernelement 2'', 2''', 2'''', und zwar im Bereich der Stöße, wenn einzelne Kernelemente aufgelegt worden sind, bzw. in gewählten Abständen bei kontinuierlicher Kernbahn. Anschließend wird die Kernbahn 2 mit der aufgebrachten armierten Mörtelschicht 9 in einem Wärmeofen 16 getrocknet und ausgehärtet. Damit ist die armierte Mörtelschicht 9' auf dem Schaumstoffkern 2' oder dem Kernelement 2'', 2''' bzw. 2'''' fest verankert. Der einseitig beschichtete Kern kann in dieser Form als Verbundplatte bereits verwendet werden. Üblicherweise wird jedoch eine beidseitig beschichtete Platte hergestellt. Dazu wird eine einseitig beschichtete Platte wieder an den Anfang der Rollenbahn 1 gebracht und so gewendet, daß nunmehr die unbeschichtete Bahnseite oben liegt und dieselbe Prozedur durchgeführt werden kann, wie bereits beschrieben worden ist. Auf die gleiche Art und Weise, wie oben ausführlich beschrieben, ist eine Verbundplatte mit einem Mineralfaserkern sowie einem anderen Kernelement aus organischen oder anorganischen Stoffen herstellbar. Als Mörtelmaterialien eignen sich verschiedene, an sich bekannte Mixturen aus Zement, Wasser, Kunststoffanteilen, aus denen ein sogenannter Dünnbettmörtel hergestellt wird. Deren Rezepturen sind jedoch spezifizierbar und bilden nicht den Gegenstand der Erfindung. Diese "Dünnbettmörtel" werden so bezeichnet, da sie üblicherweise wasserbeständigen Dünnbettmörteln für die Fliesenverlegung entsprechen.

Die Dicke der Kernbahn ist relativ unkritisch. Sie kann zwischen wenigen Millimetern und einigen Zentimetern liegen, z. B. zwischen 20 - 100 mm. Das hängt von dem jeweiligen Bedarf ab. Die Mörtelschicht 9 wird üblicherweise möglichst sparsam aufgelegt, d.h., im allgemeinen so, daß die Glasfasergewebebahn gerade umhüllt wird.

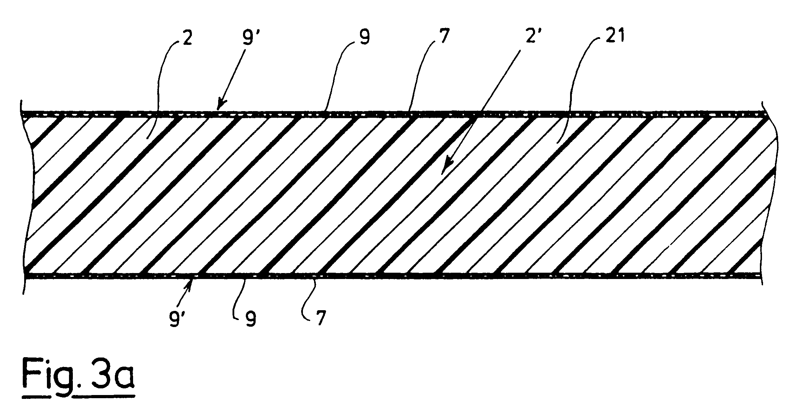

In den Figuren 3a - 3c sind einzelne Verbundplatten dargestellt, wie sie sich bei den Herstellungsverfahren ergeben.

In Figur 3a ist auf den Extruderschaumkern 2' aus Extruderschaum 21 zu beiden Seiten jeweils eine armierte Mörtelschicht 9' angeordnet. Das Glasfasergewebe oder -vlies 7 liegt dabei in der Mörtelschicht 9'.

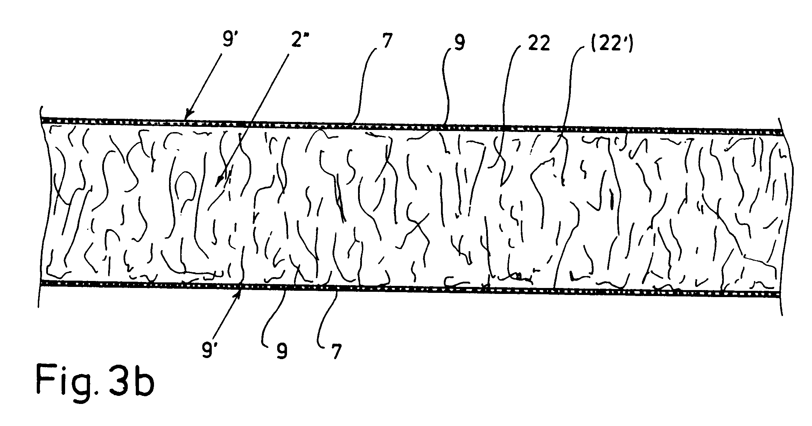

Die in Figur 3b gezeigte Verbundplatte besteht hingegen aus einem Kernelement 2'' aus reinen Mineralfasern 22 und/oder Wolle 22'. Um das Kernelement 2'' ist zu beiden Seiten jeweils eine armierte Mörtelschicht 9' aufgebracht, bei der das Glasfasergewebe oder -vlies 7 in der Mörtelschicht liegt.

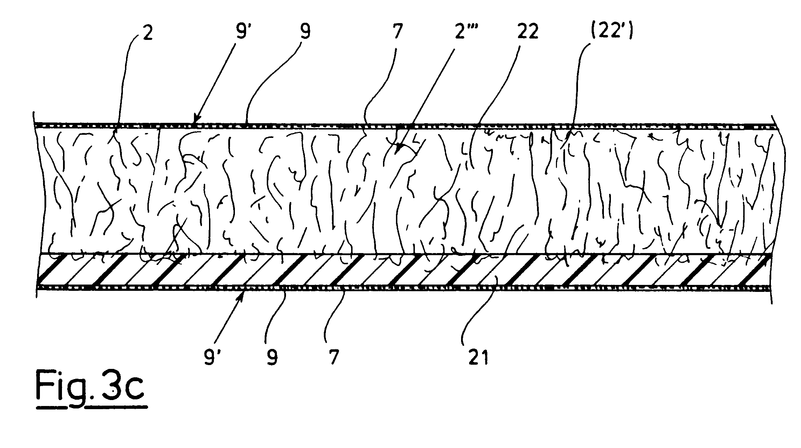

In Figur 3c ist das Kernelement 2''' ein Gemisch aus Mineralfaser 22 und/oder Wolle 22' und einer Schicht Extruderschaum. Das so entstandene Kernelement 2''' ist ebenfalls beidseitig von einer armierten Mörtelschicht 9' umfaßt, wobei das Glasfasergewebe oder -vlies 7 in der Mörtelschicht 9 angeordnet ist.

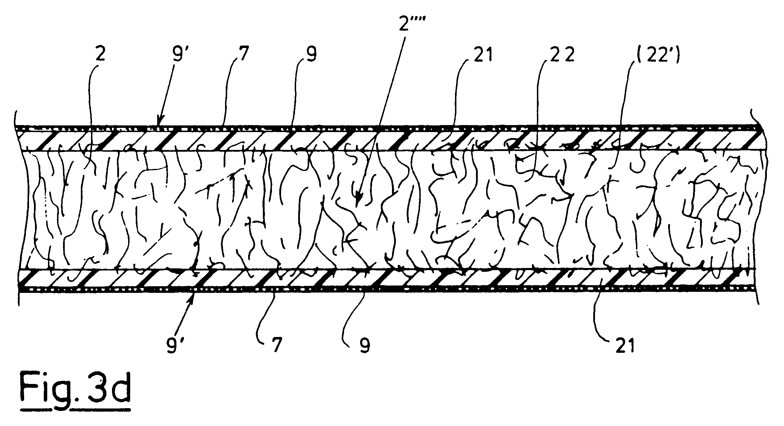

Vorteilhaft ist das Kernelement 2'''' für die in Figur 3d dargestellte Verbundplatte gestaltet. Hierbei ist eine Schicht aus Mineralfasern 22 und/oder Wollfasern 22' beidseitig sandwichartig mit einer Schicht Extruderschaum 21 versehen. Die Mineralfasern 22 und/oder die Wollfasern 22' ragen dabei analog wie in Figur 3c in die Schicht aus Extruderschaum 21 hinein. Hierdurch wird eine sehr innige und feste Verbindung zwischen der Mineralfaser 22 und/oder Wollfaser 22' und den beiden Schichten aus Extruderschaum 21 hergestellt. Durch die beiderseitige Beschichtung der Mineralfaser 22 mit Extruderschaum 21 wird erreicht, daß ein Austreten von Mineralfasern 22 verhindert wird.

Weiter ausgeschlossen werden kann diese Wirkung durch ein Gemisch mit Wolle 22' oder nur durch die Verwendung von Wolle 22'.

Möglich ist es darüberhinaus, auch jede einzelne Faser chemisch zu ummanteln bzw. zu imprägnieren. Eine Platte aus chemisch behandelten Fasern braucht nicht mit Extruderschaum, Mörtel oder Gewebe beschichtet zu werden. Auf dieses sehr stabile Kernelement 2'''' ist ebenfalls beidseitig eine armierte Mörtelschicht 9' aufbringbar, bei der das Glasfasergewebe oder -vlies 7 in der Mörtelschicht 7 angeordnet ist.

Von besonderem Vorteil ist bei allen vier gezeigten Verbundplatten, daß die Abschlußebene der Mörtelschicht und des Glasfasergewebes oder -vlieses 7 in einer Ebene liegen. Hierdurch wird gewährleistet, daß das Glasfasergewebe oder -vlies 7 zum einen innig durch die armierte Mörtelschicht 9' mit dem jeweiligen Kern verbunden ist und zum anderen die äußere Mörtelschicht eine solche Konfiguration aufweist, daß sie sich für eine weitere Verarbeitung, z. B. zum Bekleben mit Tapete, zum Aufbringen von Fliesen und dergleichen eignet.

## Patentansprüche

1. Verfahren zur Herstellung von Verbundplatten, bei dem eine Kernbahn (2) in kontinuierlichem Verfahren mit einer mit Glasfasergewebe oder dergleichen armierten Mörtelschicht belegt wird, wobei die
Kernbahn (2), die aus Kunstschaumstoff (2') und/oder aus Fasern, Kugeln, Schnitzeln, Streifen oder Teilstücken aus organischen und/oder anorganischen Stoffen besteht, als endlose Bahn (2) liegend herangeführt wird, und wobei
aushärtender Mörtel in einem fluiden Zustand auf die zu beschichtende Seite der Kernbahn auffließt und verteilt wird, dadurch gekennzeichnet,
daß eine Glasfasergewebebahn so dicht auf die Oberseite der Kernbahn (2) gelegt wird, daß gerade noch eine Klebeschicht zwischen Glasfasergewebebahn und Kernbahn verbleibt,
daß durch einen Abstreifer (10) der Mörtel so verteilt wird, daß die Mörtelschicht (9) die Bahn aus Glasfasergewebe einbettet und
daß anschließend die noch feuchte Mörtelschicht (9) trocknet und aushärtet.

2. Verfahren nach Anspruch 1, dadurch gekennzeichnet, daß die Konsistenz des flüssig aufgebrachten Mörtels nach DIN 1060 (Messung der Ausbreitung mit Wickertring) eine Ausbreitung von 22 bis 28 cm ergibt.

3. Verfahren nachAnspruch 1, dadurch gekennzeichnet, daß der flüssig aufgetragene Mörtel über zwei eng benachbart stehende, drehende Walzen (105, 106) auf die Kernbahn (2) läuft.

4. Verfahren nach Anspruch 1, dadurch gekennzeichnet, daß die Walzen sich gleichsinnig drehen.

5. Verfahren nach Anspruch 3 oder 4, dadurch gekennzeichnet, daß der Abstand und die Drehgeschwindigkeit der Walzen (105, 106) steuerbar sind.

6. Verfahren nach Anspruch 1, dadurch gekennzeichnet, daß von einem Fühler (13) die Ausdehnung sich vor einem Abstreifer (10) bildenden Mörtelschwalls (11) aufgenommen wird und die aus einer Mörtelaufbringvorrichtung (4) strömende Mörtelmenge durch ein Öffnen oder Schließen einer an der Mörtelaufbringvorrichtung (4) befindlichen Dosiervorrichtung (5) geregelt wird.

7. Verfahren nach Anspruch 5 und 6, dadurch gekennzeichnet, daß zur Steuerung der Dosierung die Drehgeschwindigkeit der Walzen (105, 106) verändert wird.

8. Verfahren nach einem der vorhergehenden Ansprüche, dadurch gekennzeichnet, daß die Kernbahn (2) mit der noch feuchten Mörtelschicht (9) und der Glasfaserarmierung im Bereich von Stößen bzw. gewählten Abständen zerschnitten wird und dann trocknet und zur Aushärtung wärmebehandelt wird.

9. Verfahren nach Anspruch 1, dadurch gekennzeichnet, daß zur Herstellung einer Kernbahn eine Schicht aus Fasern (22, 22'), Kugeln, Schnitzeln oder Teilstücken aus organischen oder anorganischen Stoffen verdichtet wird.

10. Verfahren nach Anspruch 9, dadurch gekennzeichnet, daß die Schicht aus Fasern (22, 22'), Kugeln, Schnitzeln, Streifen oder Teilstücken aus organischen und/oder anorganischen Stoffen mit Extruderschaum (21) so beschichtet wird, daß sich der Extruderschaum (21) mit den Fasern (22, 22'), Kugeln, Schnitzeln, Streifen, Teilstücken oder dergleichen aus organischen und/oder anorganischen Stoffen durchsetzt.

11. Verfahren nach einem der Ansprüche 1 bis 9, dadurch gekennzeichnet, daß der Schaumstoff (2') aus Polystyrolschaum, aus Foamglas oder aus lockerem oder geschäumtem Recycling-Material oder holzbindenden Plattenmaterial besteht.

12. Verfahren nach Anspruch 8, dadurch gekennzeichnet, daß nach dem Trocknen und Aushärtenlassen der armierten Mörtelschicht auf der einen Flachseite der Kernbahn die einseitig fertiggestellte Verbundplatte gewendet wird und das Verfahren wiederholt wird für die andere, bisher unbeschichtete Flachseite.

13. Verfahren nach einem der Ansprüche 1 bis 12, dadurch gekennzeichnet, daß der Mörtel zunächst nur grob verteilt wird und daß die Glasfaserbahn (7) in den grob verteilten Mörtel eingebettet wird.

14. Verfahren nach einem der Ansprüche 1 bis 13, dadurch gekennzeichnet, daß die Dicke der ausgehärteten, armierten Mörtelschicht (9) wenigstens 0,2 mm beträgt.

15. Verfahren nach einem der vorhergehenden Ansprüche, dadurch gekennzeichnet, daß das Glasfasergewebe über einen Bahnspeicher (19) geführt wird.

## Claims

1. A method of producing composite boards, wherein a core web (2) is coated in a continuous process with a layer of mortar reinforced with glass fibre fabric or the like, the core web (2), which is of plastic foamed material (2') and/or fibres, balls, chips, strips or pieces of organic and/or inorganic materials, being supplied horizontally in the form of an endless web (2) and hardening mortar flowing in a liquid state and being distributed on the side of the core web for coating, characterised in that
a glass fibre fabric web is laid sufficiently tightly on the surface of the core web (2) to leave just one adhesive layer between the glass-fibre fabric web and the core web,
a stripper (10) distributes the mortar so that the layer (9) of mortar embeds the web of glass fibre fabric and
the still-wet mortar layer (9) then dries and sets.

2. A method according to claim 1, characterised in that the consistency of the mortar, which is applied in the liquid state, to DIN 1060 (measurement of spread using Wickert ring) results in a spread of 22 to 28 cm.

3. A method according to claim 1, characterised in that the mortar, which is applied in the liquid state, runs through two closely adjacent rotating rollers (105, 106) on to the core web (2).

4. A method according to claim 1, characterised in that the rollers rotate in the same direction.

5. A method according to claim 3 or 4, characterised in that the distance between and the speed of rotation of the rollers (105, 106) are controllable.

6. A method according to claim 1, characterised in that a sensor (13) records the extent of the surge (11) of mortar forming in front of a stripper (10), and the amount of mortar flowing out of a supply device (4) is adjusted by opening or closing a metering device (5) on the supply device (4).

7. A method according to claims 5 and 6, characterised in that the speed of the rollers (105, 106) is altered in order to control the metering process.

8. A method according to any of the preceding claims, characterised in that the core web (2) bearing the still-wet mortar layer (9) and the glass-fibre reinforcement is cut in the region of joints or at chosen intervals and then dries and is hardened by heat-treatment.

9. A method according to claim 1, characterised in that a core web is produced by compacting a layer of fibres (22, 22'), balls, chips or pieces of organic or inorganic materials.

10. A method according to claim 9, characterised in that the layer of fibres (22, 22'), balls, chips, strips or pieces of organic and/or inorganic materials is so coated with extruder foam (21) that the extruder foam (21) permeates the fibres (22, 22'), balls, chips, strips, pieces or the like of organic and/or inorganic materials.

11. A method according to any one of claims 1 to 9, characterised in that the foamed material (2') comprises polystyrene foam, foam glass or loose or foamed recycling material or wood-bonding board material.

12. A method according to claim 8, characterised in that after the reinforced mortar layer has dried and been left to set on one flat side of the core web, the composite board, which is finished on one side, is turned and the method is repeated on the other, hitherto uncoated, flat side.

13. A method according to any of claims 1 to 12, characterised in that the mortar is initially coarsely distributed and the glass fibre web (7) is embedded in the coarsely-distributed mortar.

14. A method according to any of claims 1 to 13, characterised in that the thickness of the set reinforced mortar layer (9) is at least 0.2 mm.

15. A method according to any of the preceding claims, characterised in that the glass fibre fabric is conveyed via a web reservoir (19).

## Revendications

1. Procédé de fabrication de panneaux sandwich dans lequel une bande de plis de coeur (2) est pourvue au cours d'un processus continu d'une couche de mortier renforcée par un tissu de fibres de verre ou analogue, la bande de plis de coeur (2), qui est constituée de mousse synthétique (2') et/ou de fibres, de billes, de rognures, de bandes ou de fragments en matières organiques et/ou inorganiques, étant amenée à plat sous forme de bande (2) sans fin, et le mortier en durcissement s'écoulant et étant réparti à l'état fluide sur la face à recouvrir de la bande de plis de coeur, caractérisé en ce qu'une bande de tissu de fibres de verre est posée sur la face supérieure de la bande de plis de coeur (2) si près qu'il subsiste uniquement une couche de colle entre la bande de tissu de fibres de verre et la bande de plis de coeur, que le mortier est réparti par une racle (10) de telle manière que la couche de mortier (9) enrobe la bande de tissu de fibres de verre et que la couche de mortier (9) encore humide sèche ensuite et durcit.

2. Procédé selon la revendication 1, caractérisé en ce que la consistance du mortier appliqué à l'état liquide a, selon la norme DIN 1060 (mesure de l'expansion avec un anneau de Wickert), une expansion de 22 à 28 cm.

3. Procédé selon la revendication 1, caractérisé en ce que le mortier appliqué à l'état liquide coule sur la bande de plis de coeur (2) par l'intermédiaire de deux rouleaux (105, 106) tournants et près proches l'un de l'autre.

4. Procédé selon la revendication 1, caractérisé en ce que les rouleaux tournent dans le même sens.

5. Procédé selon la revendication 3 ou 4, caractérisé en ce que l'écartement et la vitesse de rotation des rouleaux (105, 106) peuvent être commandés.

6. Procédé selon la revendication 1, caractérisé en ce que l'extension d'un jet de mortier (11) se formant devant une racle (10) est enregistrée par un palpeur (13) et la quantité de mortier sortant d'un dispositif d'application de mortier (4) est régulée par l'ouverture et la fermeture d'un dispositif de dosage (5) se trouvant sur le dispositif d'application de mortier (4).

7. Procédé selon les revendications 5 et 6, caractérisé en ce que pour commander le dosage, on fait varier la vitesse de rotation des rouleaux (105, 106).

8. Procédé selon l'une des revendications précédentes, caractérisé en ce que la bande de plis de coeur (2) pourvue de la couche de mortier (9) encore humide et du renforcement en fibres de verre est découpée dans la région de joints ou à des intervalles choisis puis sèche et est traitée à chaud pour le durcissement.

9. Procédé selon la revendication 1, caractérisé en ce que pour fabriquer une bande de plis de coeur, on compresse une couche constituée de fibres (22, 22'), de billes, de rognures ou de fragments en matières organiques ou inorganiques.

10. Procédé selon la revendication 9, caractérisé en ce que la couche constituée de fibres (22, 22'), de billes, de rognures, de bandes ou de fragments en matières organiques et/ou inorganiques est enduite de mousse extrudée (21) de telle manière que la mousse extrudée (21) se mêle aux libres (22, 22'), billes, rognures, fragments ou analogues de matières organiques ou inorganiques.

11. Procédé selon l'une des revendications 1 à 9, caractérisé en ce que la mousse (2') est constituée de mousse de polystyrène, de verre cellulaire ou de matière recyclée non compacte ou moussée ou de matière plastique stratifiée en feuille pour la liaison de bois.

12. Procédé selon la revendication 8, caractérisé en ce que après le séchage et le durcissement de la couche de mortier renforcée sur l'une des faces plates de la bande de plis de coeur, on retourne le panneau sandwich terminé sur une face et on répète le procédé pour l'autre face plate jusque là exempte de revêtement.

13. Procédé selon l'une des revendications 1 à 12, caractérisé en ce que le mortier n'est dans un premier temps réparti que grossièrement et que la bande de fibres de verre (7) est incorporée dans le mortier réparti grossièrement.

14. Procédé selon l'une des revendications 1 à 13, caractérisé en ce que l'épaisseur de la couche de mortier (9) renforcée et durcie est d'au moins 0,2 mm.

15. Procédé selon l'une des revendications précédentes, caractérisé en ce que le tissu de fibres de verre est amené par un dispositif de stockage de bande (19).
